# FASCICULE DE BREVET EUROPEEN

(11) **EP 4 097 278 B1**
(45) Date de publication et mention de la délivrance du brevet: **03.01.2024**
(21) Numéro de dépôt: 21706346.0
(22) Date de dépôt: 21.01.2021
(51) Int. Cl.: C25D 11/24

(54) **PROCÉDÉ DE COLMATAGE DES ALLIAGES D'ALUMINIUM**
VERFAHREN ZUM ABDICHTEN VON ALUMINIUMLEGIERUNGEN
METHOD FOR SEALING ALUMINUM ALLOYS

(30) Priorité: 31.01.2020 FR 2000978
(43) Date de publication de la demande: 07.12.2022
(73) Titulaire: SAFRAN AIRCRAFT ENGINES, 75015 Paris (FR); Safran Landing Systems, 78140 Vélizy-Villacoublay (FR)
(72) Inventeur: RELLAND, Virginie, 77550 Moissy-Cramayel (FR); AUGROS, Myriam, 77550 Moissy-Cramayel (FR); BAYARD, Philippe, 77550 Moissy-Cramayel (FR); MOULS, Benjamin, 67100 Strasbourg (FR); RAMAKISTIN, Aimé, 67100 Strasbourg (FR)
(74) Mandataire: Gevers & Orès
(86) Numéro de dépôt international: PCT/FR2021/050112
(87) Numéro de publication internationale: WO 2021/152241

(56) Documents cités:
- WO-A1-2013/117767
- FR-A1- 3 106 837
- US-A1- 2002 117 236
- US-A1- 2006 191 599
- US-A1- 2016 047 057
- US-B1- 6 663 700

## Description

### Domaine technique de l'invention

La présente invention s'inscrit dans le cadre de la recherche de nouvelles solutions de protection anticorrosion sur alliages d'aluminium, notamment pour applications aéronautiques, avec ou sans application d'un système de peinture.

### Arrière-plan technique

L'arrière-plan technique comprend notamment les documents US-A1-2002/117 236, US-A1-2006/191 599A1, US-A1-6,663,700, US-A1-2016/047 057 et WO-A1-2013/117 767.

Les alliages d'aluminium sont des matériaux de choix pour l'industrie des transports, et plus particulièrement pour l'industrie aéronautique, du fait de leur excellent rapport propriétés mécaniques/poids et de leur coût de fabrication qui est relativement faible. Cependant, ces alliages sont susceptibles, suivant le milieu dans lequel ils se trouvent, d'être affectés par plusieurs types de corrosion localisée, engendrant la dégradation de la pièce et pouvant amener à son retrait ou à sa défaillance. De nombreuses stratégies ont été mises en oeuvre afin de pallier cette faiblesse, et, parmi elles, la formation ou le dépôt d'une couche protectrice à la surface des alliages est celle la plus utilisée. C'est le cas notamment des couches de protection obtenues par le procédé d'anodisation des alliages d'aluminium.

L'anodisation est un procédé électrolytique visant à substituer l'oxyde naturel (oxyde natif), de quelques nanomètres qui recouvre l'aluminium, par une couche d'oxyde pouvant aller jusqu'à plusieurs micromètres. Les couches d'oxyde produites par anodisation ont une épaisseur pouvant aller de deux microns à une quinzaine de microns, en vue d'apporter une protection contre la corrosion à long terme. L'anodisation, également nommée oxydation anodique, consiste donc à former en surface de la pièce une couche d'oxydes/hydroxydes d'aluminium poreuse dite couche anodique, par application d'un courant à la pièce immergée dans un bain électrolytique contenant un électrolyte de type acide fort, la pièce constituant l'anode du système électrolytique. La couche ainsi formée en surface de la pièce, après un traitement de colmatage, permet de renforcer la tenue à la corrosion de la pièce. Les traitements d'anodisation sont aujourd'hui couramment utilisés dans l'industrie aéronautique, principalement pour améliorer la tenue à la corrosion des pièces, et donc leur durée de vie, mais aussi pour faciliter l'accroche de couches organiques (peintures). Cependant, le procédé de l'anodisation, est directement impacté par la réglementation européenne (REACH), qui, depuis septembre 2017, interdit (ou restreint à autorisation) l'utilisation de certains composants clés dans les traitements de surface, en particulier, le chrome hexavalent. Or, le chrome hexavalent est présent dans le traitement d'anodisation de type OAC (Oxydation Anodique Chromique telle que décrite, par exemple, dans https://www.a3ts.org/actualite/commissions-techniques/fiches-techniques-traitement-surface/anodisation-chromique/), mais aussi dans les prétraitements usuels de préparation de surface, visant à nettoyer/décaper les surfaces des pièces avant le traitement d'anodisation, et enfin dans les traitements finaux dits de colmatage, dont l'objectif est de refermer les pores de la couche anodique formée lors du traitement d'anodisation.

Différents procédés ont donc été proposés pour substituer les traitements d'OAC et d'OAS (Oxydation Anodique Sulfurique) colmatés au chrome hexavalent, impactés par la réglementation européenne REACH:
- l'OAS NG (oxydation anodique sulfurique nouvelle génération telle que décrite par exemple dans https://www.a3ts.org/actualite/commissions-techniques/fiches-techniques-traitement-surface/anodisation-sulfurique-version-5-2/) a été proposée pour remplacer l'OAS ;
- l'OAST (oxydation anodique sulfo-tartrique telle que décrite, par exemple, dans https://www.a3ts.org/actualite/commissions-techniques/fiches-techniques-traitement-surface/anodisation-sulfo-tartrique-oast-tartric-sulfuric-anodizing-tsa/) a été proposée pour remplacer l'OAC.

L'OAC peut également être remplacée par l'OAS NG FE (oxydation anodique sulfurique nouvelle génération fine épaisseur) qui est une anodisation de type OAS NG dont les paramètres d'anodisation (Tension, Temps d'immersion) ont été adaptés pour obtenir une couche d'anodisation dont l'épaisseur est comprise entre 2 et 7 µm.

Bien que les solutions d'anodisation classiques actuelles, comme par exemple l'OAS NG suivie d'un colmatage à l'eau chaude, mettent en oeuvre des gammes de traitements compatibles avec la réglementation européenne REACH, elles restent néanmoins peu ou pas satisfaisantes en termes de protection anticorrosion sur certaines nuances d'alliages d'aluminium dits « difficiles ». A titre d'exemple non limitatif d'alliages d'aluminium dits « difficiles », on peut citer les alliages 2214, 2618A ou AU5NKZr. Ces alliages possèdent des microstructures particulières de par leur composition chimique, qui leur confèrent soit des défauts de type fonderie, soit des précipités tels que des intermétalliques riches en cuivre ou en fer ou en nickel, etc. Ainsi, lorsque la couche anodique se forme à la surface de ces alliages, des défauts de couches peuvent résidés, entraînant certaines fragilités locales sensibles à la corrosion.

Pour ces alliages, il est donc nécessaire d'optimiser les gammes d'anodisation afin d'améliorer les performances anticorrosion.

Il existe donc un réel besoin d'optimiser les procédés d'anodisation actuels des alliages métalliques notamment des alliages d'aluminium dits « difficiles », afin d'améliorer les performances anticorrosion de ces alliages.

Il existe également un réel besoin d'optimiser les procédés d'anodisation actuels des alliages métalliques notamment des alliages d'aluminium dits « difficiles », afin d'améliorer les performances anticorrosion de ces alliages, tout en satisfaisant les exigences de la règlementation européenne REACH.

La présente invention vise à remédier aux inconvénients des procédés d'anodisation actuels des alliages métalliques, notamment des alliages en aluminium, en particulier, des alliages d'aluminium dits difficiles, en termes de résistance à la corrosion desdits alliages.

### Résumé de l'invention

La présente invention a précisément pour but de répondre à ces besoins, en particulier, en termes de résistance à la corrosion des alliages d'aluminium, notamment des séries 2xxx, 6xxx et 7xxx, des alliages de fonderie d'aluminium tels que AS7G06, AS7G03, AS10G ou AS9U3, des alliages d'aluminiums issus de procédés tels que la fabrication additive, et des alliages d'aluminium dits difficiles, en fournissant un procédé de colmatage post-anodisation de l'aluminium ou de l'alliage d'aluminium, comportant au moins les étapes suivantes :
**A)** une étape d'imprégnation de l'aluminium ou de l'alliage d'aluminium anodisé, dans un bain aqueux d'eau déminéralisée contenant
   - un sel d'hexafluorozirconate choisi dans le groupe consistant en hexafluorozirconate d'ammonium ((NH₄)₂ZrF₆), hexafluorozirconate de sodium (Na₂ZrF₆), hexafluorozirconate de potassium (K₂ZrF₆), et
   - un sel de chrome trivalent choisi dans le groupe consistant en CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O,
   à une température comprise entre 20 et 80°C ;
**B)** une étape de colmatage réalisée dans une solution aqueuse d'eau déionisée ayant une conductivité inférieure ou égale à 100 µS/cm contenant entre 1 et 500 g/L d'un silicate de métal alcalin ou de métal alcalinoterreux, à une température comprise entre 60 et 100°C ;
C) une étape de rinçage post-colmatage avec une eau déionisée ayant une conductivité inférieure ou égale à 100 µS/cm et à une température comprise entre 15 et 75°C.

Dans l'étape d'imprégnation **A),** la concentration en sel d'hexafluorozirconate est comprise entre 0,5 et 50 g/L. La concentration en sel de chrome trivalent dans cette étape est comprise entre 0,1 et 50 g/L.

Des rinçages intermédiaires, notamment à l'eau déminéralisée, sont de préférence réalisés
- entre les étapes **A)** et **B),** et/ou
- avant et/ou après le traitement de la pièce par anodisation.

Comme les couches d'anodisation présentent une structure très poreuse, lorsque la résistance chimique et /ou à la corrosion est primordiale, il faut colmater la couche d'anodisation. Cela implique que la couche d'oxyde d'aluminium est transformée en un complexe d'hydroxyde d'aluminium où les pores sont obturés. Par conséquent, le colmatage, en plus de l'anodisation, est déterminant pour la qualité de la couche d'anodisation car :
- l'obturation des pores entraîne une augmentation de la résistance à la corrosion ;
- l'encrassement est évité ;
- le lessivage de colorants hors des pores est évité.

Le procédé de colmatage post-anodisation de l'invention permet d'obtenir un revêtement ayant des propriétés anticorrosion très élevées sur les alliages d'aluminium dits difficiles comme par exemple, le 2618A et le 2214, mais également sur les alliages d'aluminium les plus courants dans le domaine aéronautique, tels que le 2024 ou le 7175 par exemple.

Le procédé de colmatage de l'invention peut être appliqué sur différentes anodisations connues de l'homme du métier parmi lesquelles on peut citer OAST, OAS NG FE, OAS NG.

Il peut être suivi ou non d'une application de peinture, et peut également être utilisé comme traitement d'épargne au traitement d'OAD (Oxydation Anodique Dure). L'invention concerne également un procédé de traitement de surface d'une pièce en aluminium ou en alliage d'aluminium destinée à être utilisée dans le secteur aéronautique comportant au moins les étapes suivantes :
i) soumission de ladite pièce à une étape d'anodisation, ayant éventuellement subie au préalable une étape de préparation de surface (dégraissage, puis décapage) ;
ii) traitement de la pièce anodisée par un procédé de colmatage post-anodisation selon l'invention ; et éventuellement
iii) application d'une ou de plusieurs couche(s) de peinture.

L'invention concerne également un procédé de traitement de surface d'une pièce en aluminium ou en alliage d'aluminium destinée à être utilisée dans le secteur aéronautique comportant au moins les étapes suivantes :
i) soumission de ladite pièce à une étape d'anodisation, ayant éventuellement subie au préalable une étape de préparation de surface (dégraissage, puis décapage) ;
ii) traitement de la pièce anodisée par un procédé de colmatage post-anodisation selon l'invention ; et éventuellement
iv) application d'un traitement d'OAD sur au moins une partie des zones fonctionnelles de la pièce.

Un autre objet de l'invention est l'utilisation d'un procédé de colmatage post-anodisation selon l'invention, dans le traitement de surface de pièces en aluminium ou en alliage d'aluminium destinées au secteur aéronautique.

L'invention a également pour objet, une pièce en aluminium ou en alliage d'aluminium traitée par un procédé de colmatage post-anodisation selon l'invention, comportant éventuellement une ou plusieurs couches(s) de peintures et destinée au secteur aéronautique.

L'invention a, en outre, pour objet une pièce en aluminium ou en alliage d'aluminium traitée par un procédé de colmatage post-anodisation selon l'invention, comportant éventuellement sur au moins une partie des zones fonctionnelles, un traitement d'OAD (Oxydation Anodique Dure) apportant une protection anti-usure sur ces zones, ladite pièce étant destinée au secteur aéronautique.

### Brève description des figures

D'autres caractéristiques et avantages de l'invention apparaîtront au cours de la lecture de la description détaillée qui va suivre pour la compréhension de laquelle on se reportera aux dessins annexés dans lesquels :

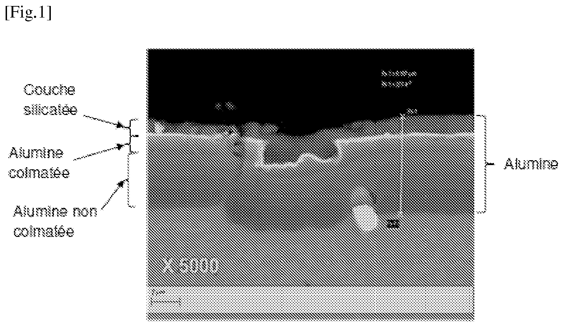

[Fig. 1] La figure 1 représente un schéma en coupe de la couche formée avec le procédé de colmatage de l'invention.

### Description détaillée de l'invention

La présente invention a précisément pour but de répondre aux besoins de l'état de la technique, en particulier, en termes de résistance à la corrosion des alliages en aluminium, notamment des séries 2xxx, 6xxx et 7xxx, des alliages de fonderie, et les alliages d'aluminium issus de procédés tels que la fabrication additive et des alliages d'aluminium dits difficiles, en fournissant un procédé de colmatage post-anodisation de l'aluminium ou de l'alliage d'aluminium, comportant au moins les étapes suivantes :
**A)** une étape d'imprégnation de l'aluminium ou de l'alliage d'aluminium anodisé, dans un bain aqueux d'eau déminéralisée contenant
   - un sel d'hexafluorozirconate choisi dans le groupe consistant en hexafluorozirconate d'ammonium ((NH₄)₂ZrF₆), hexafluorozirconate de sodium (Na₂ZrF₆), hexafluorozirconate de potassium (K₂ZrF₆), et
   - un sel de chrome trivalent choisi dans le groupe consistant en CrF₃,xH₂O, CrCl₃,xH₂O, Cr(NO₃)₃,xH₂O, (CH₃CO2)₂Cr,xH₂O, (CH₃CO₂)₇Cr₃(OH)₂,xH₂O, Cr₂(SO₄)₃,xH₂O, CrK(SO₄)₂,xH₂O,
   à une température comprise entre 20 et 80°C ;
**B)** une étape de colmatage réalisée dans une solution aqueuse d'eau déionisée ayant une conductivité inférieure ou égale à 100 µS/cm contenant entre 1 et 500 g/L d'un silicate de métal alcalin ou de métal alcalinoterreux, à une température comprise entre 60 et 100°C, de préférence comprise entre 97°C et 100°C, par exemple égale à 98°C ;
**C)** une étape de rinçage post-colmatage dans une eau déionisée ayant une conductivité inférieure ou égale à 100 µS/cm et à une température comprise entre 15 et 75°C.

Le sel de chrome trivalent, peut être, par exemple, l'un des produits commerciaux suivants : Surtec 650 de la société SURTEC, Lanthane 613.3 de la société COVENTYA, TCS de la société SOCOMORE.

Des rinçages intermédiaires, notamment à l'eau déminéralisée, sont de préférence réalisés
- entre les étapes **A)** et **B),** et/ou
- avant et/ou après le traitement de la pièce par anodisation.

Le procédé de colmatage optimisé de l'invention peut convenir à tout type d'alliages d'aluminium y compris les alliages dits « difficiles », notamment des alliages d'aluminium des séries 2xxx, 6xxx et 7xxx, préalablement anodisés par différents procédés, par exemple, par les procédés OAST (oxydation anodique sulfo-tartrique), OAS NG FE (oxydation anodique sulfurique nouvelle génération fine épaisseur) ou OAS NG (oxydation anodique sulfurique nouvelle génération).

Par ailleurs, le procédé de colmatage post-anodisation de l'invention est compatible avec les exigences associées à la réglementation européenne REACH et conduit à une bonne protection anticorrosion sur les alliages d'aluminium dits « difficiles » (par exemple, 2618A, 2214 et AU5NKZr). Ce procédé objet peut être suivi ou non d'une application de peinture.

De plus, ce procédé peut, également, être utilisé comme traitement d'épargne au traitement d'OAD. Certaines pièces aéronautiques disposent à la fois d'un traitement de protection anticorrosion de type OAC, OAS, OASNG, ou OASNGFE) et d'un traitement de protection anti-usure sur certaines zones fonctionnelles obtenue par un traitement d'OAD. Dans les gammes de mise en oeuvre de l'OAD, le traitement initial anticorrosion (OAC, OAS, OASNG, ou OASNGFE) peut être réalisé en premier. Le traitement d'OAD peut être réalisé en second sur les zones en aluminium nu (soit les zones ont été masquées préalablement au traitement d'OAC, OAS, OASNG, ou l'OASNGFE, soit elles ont été traitées en OAC, OAS, OASNG, ou OASNGFE puis découvertes par usinage afin de pouvoir accueillir le traitement d'OAD). Ainsi la pièce pré-anodisée par le traitement d'OAC, OAS, OASNG, ou l'OASNGFE sert d'épargne au traitement d'OAD. Dans l'art antérieur, le colmatage à base de chrome VI des procédés OAC ou OAS avait l'avantage d'être présenté comme résistant au procédé d'OAD si bien qu'il n'était pas nécessaire de masquer les pièces pré-anodisées avant de réaliser le procédé d'OAD. L'OAC ou l'OAS faisaient donc office d'épargne à l'OAD, sans dégradation des performances de l'OAC ou de l'OAS (absence de reprise d'OAD sur l'OAC ou l'OAS et maintien des propriétés initiales d'anticorrosion). Les nouveaux traitements conformes à la réglementation européenne REACH, comme l'OAST, l'OAS NG ou l'OAS NG FE colmatés à l'eau chaude seule ne sont pas suffisamment robustes pour jouer le rôle d'épargne à l'OAD : cela se traduit par des phénomènes de reprises d'OAD sur les zones pré-anodisées par l'OAST LC, l'OAS NG ou l'OAS NG FE (traitements d'épargnes), dépendantes de nombreux paramètres procédé (cycle électrique, alliage, épaisseur de couche d'anodisation...), impliquant une dégradation importante de la tenue à la corrosion des traitements d'épargnes. Le procédé de colmatage post-anodisation de l'invention permet de garantir le rôle d'épargne à l'OAD. Ainsi, les performances anticorrosion des alliages d'aluminium prétraités par ledit procédé de l'invention sont maintenues après la réalisation du traitement d'OAD sur les zones fonctionnelles définies.

Ainsi, le procédé de colmatage post-anodisation de l'invention permet d'obtenir un revêtement ayant des propriétés anticorrosion très élevées sur les alliages d'aluminium des séries 2xxx, 6xxx et 7xxx et les alliages d'aluminium difficiles, mais également sur les alliages d'aluminium les plus courants dans le domaine aéronautique, tels que le 2024 et le 7175 et les alliages d'aluminium dits « difficiles » tels que le 2618A et le 2214. Ce procédé joue également le rôle d'épargne à l'OAD.

Le procédé de l'invention convient, plus particulièrement, à des pièces en aluminium et alliage d'aluminium des séries 2xxx, 6xxx et 7xxx, notamment choisi dans le groupe consistant en 2014, 2017, 2024, 2214, 2219, 2618, AU5NKZr, 7175, 5052, 5086, 6061, 6063, 7010, 7020, 7050, 7050 T7451, 7055, 7068, 7085, 7075, 7175 et 7475, alliages de fonderie d'aluminium type AS7G06, AS7G03, AS10G et AS9U3, alliages d'aluminiums issus de procédés tels que la fabrication d'additive.

Dans l'étape d'imprégnation **A),** la concentration en sel d'hexafluorozirconate est comprise entre 0,5 et 50 g/L, par exemple égale à 2 g/L. La concentration en sel de chrome trivalent dans cette étape est comprise entre 0,1 et 50 g/L, par exemple égale à 1 g/L.

La température du bain l'étape **A)** peut être comprise entre 20 et 80°C, de préférence comprise entre 20 et 60°C, plus préférentiellement comprise entre 35 et 60°C, par exemple comprise entre 35 et 45°C.

Le pH du bain à l'étape **A)** est compris entre 3 et 5, de préférence compris entre 3,5 et 4,5, par exemple compris entre 3,7 et 4,2.

La durée de l'imprégnation, dans le bain à l'étape **A)** est comprise entre 1 et 40 minutes, de préférence comprise entre 5 et 30 minutes, par exemple comprise entre 5 et 20 minutes.

L'étape d'imprégnation **A)** est suivie d'une étape **B)** qui est une étape de colmatage. Le colmatage de l'étape **B)** est réalisé dans une solution aqueuse d'eau déionisée ayant une conductivité inférieure ou égale à 200 µS/cm, de préférence comprise entre 1 et 100 µS/cm, par exemple comprise entre 1 et 50 µS/cm.

La température de la solution aqueuse de l'étape **B)** est de préférence comprise entre 80 et 100°C, par exemple comprise entre 80 et 98°C.

Le silicate de métal alcalin ou de métal alcalinoterreux peut être choisi dans le groupe consistant en silicate de lithium, silicate de sodium, silicate de potassium, silicate de calcium et silicate de magnésium.

Dans l'étape de colmatage **B),** la concentration en silicate de métal alcalin ou de métal alcalinoterreux dans la solution est, de préférence, comprise entre 1 et 500g/L, par exemple comprise entre 5 et 100 g/L.

La durée de l'étape de colmatage **B)** est comprise entre 1 et 40 minutes, de préférence comprise entre 5 et 35 minutes, par exemple comprise entre 5 et 30 minutes.

Le pH de la solution de colmatage est entre 9 et 12, de préférence entre 10 et et 11,5 minutes, par exemple entre 10,5 et 11,4.

Le colmatage est suivi d'une étape de rinçage **C)** dans une eau déionisée ayant une conductivité inférieure ou égale à 100 µS/cm, de préférence comprise entre 1 et 100 µS/cm, plus préférentiellement comprise entre 10 et 100 µS/cm par exemple comprise entre 10 et 50 µS/cm.

Le rinçage post-colmatage se réalise de préférence à une température comprise entre 10 et 75°C, par exemple comprise entre 15 et 60°C.

Le pH de l'eau dans l'étape **C)** est entre 4,5 et 8,5, de préférence entre 5 et 8, par exemple entre 5,5 et 7,5.

La durée du rinçage post-colmatage est comprise entre 10 secondes et 10 minutes, de préférence comprise entre 10 secondes et 5 minutes, par exemple comprise entre 30 secondes et 2 minutes.

Il a été constaté de manière tout à fait inattendue, que l'association des étapes, d'imprégnation + colmatage + rinçage post-colmatage, telles que décrites ci-dessous est indispensable pour garantir de bonnes performances anticorrosion de l'aluminium ou de l'alliage d'aluminium.

Des rinçages intermédiaires, notamment à l'eau déminéralisée, peuvent être réalisés entre les étapes décrites ci-dessus.

Avant de soumettre l'aluminium ou l'alliage d'aluminium à l'étape d'anodisation, l'aluminium ou l'alliage d'aluminium peut être soumis à une étape de préparation de surface par dégraissage et/ou de décapage afin d'éliminer les graisses, salissures et oxydes présents sur sa surface.

Cette étape préalable de préparation de surface peut comporter une ou plusieurs des opérations suivantes :
- dégraissage au solvant, pour dissoudre des graisses présentes à la surface de l'aluminium ou de l'alliage d'aluminium. Cette opération peut être réalisée par trempage, aspersion, ou tout autre méthode connue de l'homme du métier ;
- dégraissage alcalin, pour dissoudre des graisses présentes à la surface de l'aluminium ou de l'alliage d'aluminium. Cette opération peut être réalisée par trempage, aspersion, ou toute autre technique connue de l'homme du métier ;
- décapage alcalin, pour dissoudre les oxydes naturellement formés à la surface de l'aluminium ou de l'alliage d'aluminium. Cette opération peut être réalisée par trempage, aspersion, ou toute autre technique connue de l'homme du métier. A l'issue de cette opération, l'aluminium ou l'alliage d'aluminium est recouvert d'une couche pulvérulente formée de produits d'oxydation des composés intermétalliques, qu'il convient d'éliminer par une étape de décapage acide ;
- décapage acide, pour dissoudre les oxydes naturellement formés à la surface de l'aluminium ou de l'alliage d'aluminium, et/ou la couche d'oxydation formée à la surface de la pièce lors de l'étape de décapage alcalin. Cette opération peut être réalisée par trempage, aspersion, ou toute autre technique connue de l'homme du métier.

L'étape préalable de préparation de surface de l'aluminium ou de l'alliage d'aluminium par dégraissage et/ou de décapage pour éliminer les graisses, salissures et oxydes présents sur sa surface peut être effectuée dans les conditions décrites, par exemple, dans la demande WO 2013/117759.

Des rinçages intermédiaires, notamment à l'eau déminéralisée, sont, de préférence, réalisés entre les étapes successives ci-dessus, et avant le traitement de la pièce par anodisation.

Avant l'application du procédé de colmatage de l'invention, l'aluminium ou l'alliage d'aluminium, éventuellement soumis à une étape de préparation de surface par dégraissage et/ou de décapage par une ou plusieurs des opérations décrites ci-dessus, est anodisé. Tout type d'anodisation sur aluminium connu de l'homme du métier peut convenir. A ce titre on peut citer
- OAS : **O**xydation **A**nodique **S**ulfurique (colmatage à base de Chrome VI, procédé impacté par la réglementation européenne REACH),
- OAC : **O**xydation **A**nodique **C**hromique (À base de Chrome VI, procédé impacté par la réglementation européenne REACH),
- OAST : **O**xydation **A**nodique **S**ulfo**T**artrique,
- OAST : **O**xydation **A**nodique **S**ulfo**T**artrique,
- OAS NG FE : **O**xydation **A**nodique **S**ulfurique **N**ouvelle **G**énération **F**ine **E**paisseur,
- OAS NG : **O**xydation **A**nodique **S**ulfurique **N**ouvelle **G**énération.

Dans le cadre de la présente invention, les procédés d'anodisation OAST LC, OAS NG FE, OAS NG sont préférés.

Le procédé de traitement de surface de l'invention améliore sensiblement les propriétés de résistance à la corrosion de pièces en métal ou en alliage métallique, notamment de pièces en aluminium ou en alliage d'aluminium et respectent les exigences de la réglementation européenne REACH.

Le procédé de l'invention présente un grand intérêt dans tout type d'industrie où on cherche à améliorer des propriétés de résistance à la corrosion de pièces en métal ou en alliage métallique, notamment de pièces en aluminium ou en alliage d'aluminium, comme dans l'aéronautique, l'automobile, dans l'industrie pétrolière etc.

Le procédé selon l'invention peut comprendre une ou plusieurs des caractéristiques et/ou étapes suivantes, prises isolément les unes des autres ou en combinaison les unes avec les autres :
- l'alliage d'aluminium est un alliage d'aluminium des séries 2xxx, 6xxx et 7xxx, notamment choisi dans le groupe consistant en 2014, 2017, 2024, 2214, 2219, 2618, AU5NKZr, 7175, 5052, 5086, 6061, 6063, 7010, 7020, 7050, 7050 T7451, 7055, 7068, 7085, 7075, 7175 et 7475, alliages de fonderie d'aluminium type AS7G06, AS7G03, AS10G et AS9U3, alliages d'aluminiums issus de procédés tels que la fabrication d'additive ;
- dans l'étape d'imprégnation **A),** la concentration en sel d'hexafluorozirconate est comprise entre 0,5 et 50 g/L ;
- dans l'étape d'imprégnation **A),** la concentration en sel de chrome trivalent est comprise entre 0,1 et 50 g/L ;
- le colmatage de l'étape **B)** est réalisé dans une solution aqueuse d'eau déionisée ayant une conductivité comprise entre 1 et 100 µS/cm ;
- le silicate de métal alcalin ou de métal alcalinoterreux est choisi dans le groupe consistant en silicate de lithium, silicate de sodium, silicate de potassium, silicate de calcium et silicate de magnésium ;
- la concentration en silicate de métal alcalin ou de métal alcalinoterreux dans la solution est comprise entre 5 et 100 g/L ;
- l'étape de rinçage **C)** se réalise dans une eau déionisée ayant une conductivité comprise entre 1 et 100 µS/cm.

L'invention concerne également un procédé de traitement de surface d'une pièce en aluminium ou en alliage d'aluminium destinée à être utilisée dans le secteur aéronautique comportant au moins les étapes suivantes :
i) soumission de ladite pièce à une étape d'anodisation, ayant éventuellement subie au préalable une étape de préparation de surface (dégraissage, puis décapage) ;
ii) traitement de la pièce anodisée par un procédé de colmatage post-anodisation selon l'invention ; et éventuellement
iii) application d'une ou de plusieurs couche(s) de peinture.

L'invention concerne également un procédé de traitement de surface d'une pièce en aluminium ou en alliage d'aluminium destinée à être utilisée dans le secteur aéronautique comportant au moins les étapes suivantes :
i) soumission de ladite pièce à une étape d'anodisation, ayant éventuellement subie au préalable une étape de préparation de surface (dégraissage, puis décapage) ;
ii) traitement de la pièce anodisée par un procédé de colmatage post-anodisation selon l'invention ; et éventuellement
iv) application d'un traitement d'OAD sur au moins une partie des zones fonctionnelles de la pièce.

Un autre objet de l'invention est l'utilisation d'un procédé de colmatage post-anodisation selon l'invention, dans le traitement de surface de pièces en aluminium ou en alliage d'aluminium destinées au secteur aéronautique.

L'invention a également pour objet, une pièce en aluminium ou en alliage d'aluminium traitée par un procédé de colmatage post-anodisation selon l'invention, comportant éventuellement une ou plusieurs couches(s) de peintures et destinée au secteur aéronautique.

L'invention a, en outre, pour objet une pièce en aluminium ou en alliage d'aluminium traitée par un procédé de colmatage post-anodisation selon l'invention, comportant éventuellement sur au moins une partie des zones fonctionnelles, un traitement d'OAD (Oxydation Anodique Dure) apportant une protection anti-usure sur ces zones, ladite pièce étant destinée au secteur aéronautique. Cette pièce peut être traitée en surface par un procédé de traitement tel que décrit ci-dessus.

Le procédé de l'invention est également applicable pour les applications suivantes :
- Traitement pour l'épargne à l'oxydation anodique dure (OAD) : certaines pièces aéronautiques requièrent la présence d'un traitement d'OAD sur certaines zones fonctionnelles pour lesquelles une protection anti-usure est nécessaire. L'invention est compatible des traitements utilisés en épargne à l'OAD, tels que l'OAC, l'OAS, l'OAST LC, l'OAS NG FE, ou l'OAS NG ;
- Traitement d'anodisation suivi d'une application peinture : certaines pièces aéronautiques ont un traitement de peinture après anodisation afin de renforcer la protection anticorrosion. L'invention est compatible avec des différents systèmes de peinture.

D'autres avantages et caractéristiques de l'invention apparaîtront à la lecture des exemples ci-dessous donnés à titre illustratif.

### EXEMPLES

### Exemple 1 :

### Procédé de colmatage post-anodisation des pièces en alliage d'aluminium

Des pièces en alliage d'aluminium 2024 T351 et 2618A T851 de dimensions 120x100x5 mm sont traitées suivant les méthodes décrites ci-après.

Des étapes de préparation de surface de la pièce sont tout d'abord réalisées successivement :
- dégraissage alcalin, par trempage de la pièce dans une solution de SOCOCLEAN A3431 à 10% en volume, à une température de 40°C, pendant 5 minutes ;
- rinçage à l'eau du robinet ou à l'eau déminéralisée ;
- décapage acide par trempage de la pièce dans un mélange de SOCOSURF A1858 à 50% en volume et SOCOSURF A1806 à 10% en volume à une température de 50°C pendant 10 minutes.;
- rinçage à l'eau du robinet ou à l'eau déminéralisée.

Les pièces décapées et rincées sont ensuite soumises à un procédé d'anodisation selon les méthodes conventionnelles d'anodisation chromique (OAC), d'anodisation sulfurique nouvelle génération (épaisseur standard ou fine épaisseur (FE)), et d'anodisation sulfo-tartrique (OAST).

Les paramètres opératoires pour les différentes anodisations sont indiqués dans le tableau 1 ci-dessous.

**[Tableau 1]**

| | **OAC** | **OAST** | **OAS NG** | **OAS NG FE** |
|---|---|---|---|---|
| **Composition du bain** | CrO₃ : 40 - 60 g/L | C₄H₆O₆ : 72 - 88 g/L | H₂SO₄ : 150- 220 g/L | H₂SO₄ : 150 - 220 g/L |
| | | H₂SO₄ : 36 - 44 g/L | | |
| **Température du bain** | 38 - 42°C | 36 - 39°C | 16 - 20°C | 16 - 20°C |
| **Epaisseur de la couche formée (µm)** | 2 - 7 µm | 4 - 7 µm | 8 - 15 µm | 2 - 7 µm |

Les pièces anodisées selon l'invention sont alors soumises au procédé de colmatage conforme à l'invention dans des conditions et dans l'ordre indiqués ci-dessous dans:
- étape **A) :** une étape imprégnation desdites pièces, successivement, dans un bain aqueux contenant 2 g/L de ((NH₄)₂ZrF₆) et 0,5 g/L de Cr₂(SO₄)₃,xH₂O, , à une température de 40°C pendant 10 minutes et à un pH de 3,9, puis
- étape **B) :** un colmatage par immersion des pièces à l'issue une solution aqueuse d'eau déionisée ayant une conductivité inférieure à 100 µS/cm avec 80g/L d'un silicate de sodium, une température de 98 °C et pendant 20 minutes ; et
- étape **C) :** un rinçage post-colmatage par immersion des pièces à l'issue des trois opérations de colmatages précédentes dans une eau déionisée ayant une conductivité inférieure à 100 µS/cm, à une température de 20°C pendant 1 minutes.

Entre chaque étape un rinçage à l'eau déminéralisée est effectué.

Ces conditions sont indiquées dans le [Tableau 2].

**[Tableau 2]**

| | **Imprégnation** | **Colmatage** | **Rinçage post-colmatage** |
|---|---|---|---|
| **Composition du bain** | ((NH₄)₂ZrF₆) = 2 g/L (Cr₂(SO₄)₃,xH₂O) = 0,5 g/L de | Eau déionisée (conductivité ≤ 100 µS/cm) + silicate de sodium 80 g/L | Eau déionisée (conductivité ≤ 100 µS/cm) |
| **Température du bain** | 35 à 45°C | 98°C | 20°C |
| **pH du bain** | 3,7 - 4,2 | 10,5 - 11,4 | 5,5 - 7,5 |
| **Temps de traitement** | 5 à 20 min | 5 à 30 min | 10s à 2 min |

### Résultats de tenue à la corrosion évalués sur différents alliages anodisés et colmatés par les méthodes de colmatage conventionnelles et par le procédé de l'invention:

A titre de comparaison, les pièces en alliages d'aluminium anodisées selon les méthodes conventionnelles indiquées dans le [Tableau 1], sont ensuite soumises à une ou plusieurs opérations de colmatage conventionnels tels que colmatage aux sels de chrome hexavalent, colmatage hydrothermal suivant les méthodes conventionnelles connues de l'homme du métier et comparées aux pièces anodisées et colmatées par le procédé de l'invention. Les pièces ainsi traitées sont soumises à un test de tenue au brouillard salin conforme à la norme NF EN ISO 9227. Les résultats sont indiqués dans le [Tableau 3].

**[Tableau 3]**

| | **Brouillard salin neutre après 500h (Nb de piqures/dm² (moyenne sur 3 pièces))** | |
|---|---|---|
| **Type d'anodisation** | **2024 T351** | **2618A T851** |
| **OAC colmatage aux sels de chrome hexavalent** | < 1 | 6 |
| **OAS NG FE colmatage hydrothermal** | 6 | 6 |
| **OAS NG FE colmatage selon l'invention** | 0 | 0 |
| **OAST LC colmatage hydrothermal** | < 1 | 5 |
| **OAST LC colmatage selon l'invention** | 0 | 0 |

D'après les données présentées dans le [Tableau 3], on observe que des gammes d'anodisation contenant des produits à base de chrome hexavalent, comme par exemple l'OAC, ou des gammes d'anodisation compatibles avec les exigences de la réglementation européenne REACH, comme par exemple l'OAS NG, conduisent à des performances de résistance à la corrosion saline moindres.

Les traitements d'anodisations suivis d'un colmatage selon l'invention à base de silicates obtiennent, quant à eux, des performances anticorrosion bien meilleures. Dans le procédé de l'invention, l'association des 3 étapes, imprégnation + colmatage + rinçage post-colmatage, semble être indispensable pour garantir de bonnes performances anticorrosion.

## Revendications

1. Procédé de colmatage post-anodisation de l'aluminium ou de l'alliage d'aluminium anodisé, comportant au moins les étapes suivantes :
**A)** une étape d'imprégnation de l'aluminium ou de l'alliage d'aluminium anodisé, dans un bain aqueux d'eau déminéralisée contenant
• un sel d'hexafluorozirconate choisi dans le groupe consistant en hexafluorozirconate d'ammonium ((NH₄)₂ZrF₆), hexafluorozirconate de sodium (Na₂ZrF₆), hexafluorozirconate de potassium (K₂ZrF₆), et
• un sel de chrome trivalent choisi dans le groupe consistant en CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O,
à une température comprise entre 20 et 80°C ; suivie d'une étape
**B)** de colmatage réalisée dans une solution aqueuse d'eau déionisée ayant une conductivité inférieure ou égale à 100 µS/cm contenant entre 1 et 500 g/L d'un silicate de métal alcalin ou de métal alcalinoterreux, à une température comprise entre 60 et 100°C ; suivie d'une étape **C)** de rinçage post-colmatage dans une eau déionisée ayant une conductivité inférieure ou égale à 100 µS/cm et à une température comprise entre 15 et 75°C,

2. Procédé selon la revendication 1, **caractérisé en ce que** l'alliage d'aluminium est un alliage d'aluminium des séries 2xxx, 6xxx et 7xxx, notamment choisi dans le groupe consistant en 2014, 2017, 2024, 2214, 2219, 2618, AU5NKZr, 7175, 5052, 5086, 6061, 6063, 7010, 7020, 7050, 7050 T7451, 7055, 7068, 7085, 7075, 7175 et 7475, alliages de fonderie d'aluminium type AS7G06, AS7G03, AS10G et AS9U3, alliages d'aluminiums issus de procédés tels que la fabrication d'additive

3. Procédé selon l'une des revendications 1 ou 2, **caractérisé en ce que** dans l'étape d'imprégnation **A),** la concentration en sel d'hexafluorozirconate est comprise entre 0,5 et 50 g/L.

4. Procédé selon l'une quelconque des revendications 1 à 3, **caractérisé en ce que** dans l'étape d'imprégnation **A),** la concentration en sel de chrome trivalent est comprise entre 0,1 et 50 g/L.

5. Procédé selon l'une quelconque des revendications 1 à 4, **caractérisé en ce que** le colmatage de l'étape **B)** est réalisé dans une solution aqueuse d'eau déionisée ayant une conductivité comprise entre 1 et 100 µS/cm.

6. Procédé selon l'une quelconque des revendications 1 à 5, **caractérisé en ce que** le silicate de métal alcalin ou de métal alcalinoterreux est choisi dans le groupe consistant en silicate de lithium, silicate de sodium, silicate de potassium, silicate de calcium et silicate de magnésium.

7. Procédé selon l'une quelconque des revendications 1 à 6, **caractérisé en ce que** la concentration en silicate de métal alcalin ou de métal alcalinoterreux dans la solution est comprise entre 5 et 100 g/L.

8. Procédé selon l'une quelconque des revendications 1 à 7, **caractérisé en ce que** l'étape de rinçage **C)** se réalise dans une eau déionisée ayant une conductivité comprise entre 1 et 100 µS/cm.

9. Procédé de traitement de surface d'une pièce en aluminium ou en alliage d'aluminium destinée à être utilisée dans le secteur aéronautique comportant au moins les étapes suivantes :
i) soumission de ladite pièce à une étape d'anodisation, ayant éventuellement subie au préalable une étape de préparation de surface (dégraissage, puis décapage) ;
ii) traitement de la pièce anodisée par un procédé de colmatage post-anodisation selon l'une quelconque des revendications 1 à 8 ; et
iii) application d'une ou de plusieurs couche(s) de peinture.

10. Procédé de traitement de surface d'une pièce en aluminium ou en alliage d'aluminium destinée à être utilisée dans le secteur aéronautique comportant au moins les étapes suivantes :
i) soumission de ladite pièce à une étape d'anodisation, ayant éventuellement subie au préalable une étape de préparation de surface (dégraissage, puis décapage) ;
ii) traitement de la pièce anodisée par un procédé de colmatage post- anodisation selon l'une quelconque des revendications 1 à 8 ; et éventuellement
iv) application d'un traitement d'OAD sur au moins une partie des zones fonctionnelles de la pièce.

11. Utilisation d'un procédé de colmatage post-anodisation selon l'une quelconque des revendications 1 à 8, dans le traitement de surface de pièces en aluminium ou en alliage d'aluminium destinées au secteur aéronautique.

12. Pièce en aluminium, ou en alliage d'aluminium, traitée par un procédé de colmatage post-anodisation selon l'une quelconque des revendications 1 à 8, destinée au secteur aéronautique.

13. Pièce en aluminium ou en alliage d'aluminium selon la revendication 12, **caractérisée en ce qu'**elle est traitée en surface par un procédé de traitement de surface selon la revendication 9 ou 10.

## Patentansprüche

1. Verfahren zum Abdichten nach einer Anodisierung von Aluminium oder einer anodisierten Aluminiumlegierung, umfassend mindestens die folgenden Schritte:
A) einen Schritt des Imprägnierens des Aluminiums oder der anodisierten Aluminiumlegierung in einem wässrigen Bad aus demineralisiertem Wasser, enthaltend
- ein Hexafluorzirkonatsalz, ausgewählt aus der Gruppe bestehend aus Ammoniumhexafluorzirkonat ((NH₄)₂ZrF₆), Natriumhexafluorzirkonat (Na₂ZrF₆), Kaliumhexafluorzirkonat (K₂ZrF₆), und
- ein dreiwertiges Chromsalz, ausgewählt aus der Gruppe bestehend aus CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O,
bei einer Temperatur zwischen 20 und 80 °C, gefolgt von einem Schritt
B) des Abdichtens, der in einer wässrigen Lösung aus deionisiertem Wasser durchgeführt wird, das eine
Leitfähigkeit von weniger als oder gleich 100 µS/cm aufweist, enthaltend zwischen 1 und 500 g/L eines Alkalimetall- oder Erdalkalimetallsilicats, bei einer Temperatur zwischen 60 und 100 °C, gefolgt von einem Schritt
C) des Spülens nach dem Abdichten in einem deionisierten Wasser, das eine Leitfähigkeit
von weniger als oder gleich 100 µS/cm aufweist, und bei einer Temperatur zwischen 15 und 75°C.

2. Verfahren nach Anspruch 1, **dadurch gekennzeichnet, dass** die Aluminiumlegierung eine Aluminiumlegierung der Serien 2xxx, 6xxx und 7xxx ist, insbesondere ausgewählt aus der Gruppe bestehend aus 2014, 2017, 2024, 2214, 2219, 2618, AU5NKZr, 7175, 5052, 5086, 6061, 6063, 7010, 7020, 7050, 7050T7451, 7055, 7068, 7085, 7075, 7175 und 7475, Aluminium-Gusslegierungen vom Typ AS7G06, AS7G03, AS10G und AS9U3, Aluminiumlegierungen, die aus Verfahren wie beispielsweise der additiven Herstellung stammen.

3. Verfahren nach Anspruch 1 oder 2, **dadurch gekennzeichnet, dass** die Konzentration von Hexafluorzirkonatsalz im Schritt des Imprägnierens A) zwischen 0,5 und 50 g/L beträgt.

4. Verfahren nach einem der Ansprüche 1 bis 3, **dadurch gekennzeichnet, dass** die Konzentration von dreiwertigem Chromsalz im Schritt des Imprägnierens A) zwischen 0,1 und 50 g/L beträgt.

5. Verfahren nach einem der Ansprüche 1 bis 4, **dadurch gekennzeichnet, dass** der Schritt des Abdichtens B) in einer wässrigen Lösung aus deionisiertem Wasser durchgeführt wird, das eine Leitfähigkeit zwischen 1 und 100 µS/cm aufweist.

6. Verfahren nach einem der Ansprüche 1 bis 5, **dadurch gekennzeichnet, dass** das Alkalimetall- oder Erdalkalimetallsilicat aus der Gruppe ausgewählt wird bestehend aus Lithiumsilicat, Natriumsilicat, Kaliumsilicat, Calciumsilicat und Magnesiumsilicat.

7. Verfahren nach einem der Ansprüche 1 bis 6, **dadurch gekennzeichnet, dass** die Konzentration von Alkalimetall- oder Erdalkalimetallsilicat in der Lösung zwischen 5 und 100 g/L beträgt.

8. Verfahren nach einem der Ansprüche 1 bis 7, **dadurch gekennzeichnet, dass** der Schritt des Spülens C) in einem deionisierten Wasser durchgeführt wird, das eine Leitfähigkeit zwischen 1 und 100 µS/cm aufweist.

9. Verfahren zur Behandlung einer Oberfläche eines Werkstücks aus Aluminium oder aus einer Aluminiumlegierung, das dazu vorgesehen ist, im Luftfahrzeugsektor verwendet zu werden, umfassend mindestens die folgenden Schritte:
i) Unterziehen des Werkstücks einem Schritt der Anodisierung, das gegebenenfalls einem vorangehenden Schritt des Vorbereitens der Oberfläche (Entfettung, dann Beizen) unterzogen wurde;
ii) Behandeln des anodisierten Werkstücks durch ein Verfahren des Abdichtens nach einer Anodisierung nach einem der Ansprüche 1 bis 8; und
iii) Anbringen einer oder mehrerer Farbschicht(en).

10. Verfahren zur Behandlung einer Oberfläche eines Werkstücks aus Aluminium oder aus einer Aluminiumlegierung, das dazu vorgesehen ist, im Luftfahrzeugsektor verwendet zu werden, umfassend mindestens die folgenden Schritte:
i) Unterziehen des Werkstücks einem Schritt der Anodisierung, das gegebenenfalls einem vorangehenden Schritt des Vorbereitens der Oberfläche (Entfettung, dann Beizen) unterzogen wurde;
ii) Behandeln des anodisierten Werkstücks durch ein Verfahren des Abdichtens nach einer Anodisierung nach einem der Ansprüche 1 bis 8; und gegebenenfalls
iv) Anwenden einer HAO-Behandlung an mindestens einem Teil der funktionellen Bereiche des Werkstücks.

11. Verwendung eines Verfahrens zum Abdichten nach einer Anodisierung nach einem der Ansprüche 1 bis 8 bei der Oberflächenbehandlung von Werkstücken aus Aluminium oder aus einer Aluminiumlegierung, die für den Luftfahrzeugsektor vorgesehen sind.

12. Werkstück aus Aluminium oder aus einer Aluminiumlegierung, das durch ein Verfahren zum Abdichten nach einer Anodisierung nach einem der Ansprüche 1 bis 8 behandelt wurde und das für den Luftfahrzeugsektor vorgesehen ist.

13. Werkstück aus Aluminium oder aus einer Aluminiumlegierung nach Anspruch 12, **dadurch gekennzeichnet, dass** es durch ein Verfahren zur Oberflächenbehandlung nach Anspruch 9 oder 10 oberflächenbehandelt wurde.

## Claims

1. A method for post-anodization sealing of anodized aluminium or aluminium alloy, comprising at least the following steps:
**A)** a step of impregnating the anodized aluminium or the aluminium alloy, in an aqueous bath of demineralized water containing
- a hexafluorozirconate salt selected from the group consisting of ammonium hexafluorozirconate ((NH₄)₂ZrF₆), sodium hexafluorozirconate (Na₂ZrF₆), potassium hexafluorozirconate (K₂ZrF₆), and
- a trivalent chromium salt selected from the group consisting of CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O,
at a temperature between 20 and 80°C; followed by a step of
**B)** sealing carried out in an aqueous solution of deionized water having a conductivity less than or equal to 100 µS/cm containing between 1 and 500 g/L of an alkali metal or alkaline earth metal silicate, at a temperature of between 60 and 100°C; followed by a step of
**C)** post-sealing rinsing in a deionized water having a conductivity less than or equal to 100 µS/cm and at a temperature between 15 and 75°C.

2. The method according to claim 1, **characterised in that** the aluminium alloy is an aluminium alloy of the 2xxx, 6xxx and 7xxx series, in particular selected from the group consisting of 2014, 2017, 2024, 2214, 2219, 2618, AU5NKZr, 7175, 5052, 5086, 6061, 6063, 7010, 7020, 7050, 7050 T7451, 7055, 7068, 7085, 7075, 7175 et 7475, aluminium foundry alloys type AS7G06, AS7G03, AS10G and AS9U3, aluminium alloys resulting from methods such as the additive manufacture.

3. The method according to one of claims 1 or 2, **characterised in that** in the impregnation step **A),** the hexafluorozirconate salt concentration is between 0.5 and 50 g/L.

4. The method according to any one of claims 1 to 3, **characterised in that** in the impregnation step **A),** the concentration of trivalent chromium salt is between 0.1 and 50 g/L.

5. The method according to any one of claims 1 to 4, **characterised in that** the sealing of the step **B)** is carried out in an aqueous deionized water solution having a conductivity between 1 and 100 µS/cm.

6. The method according to any one of claims 1 to 5, **characterised in that** the alkali metal or alkaline earth metal silicate is selected from the group consisting of lithium silicate, sodium silicate, potassium silicate, calcium silicate and magnesium silicate.

7. The method according to any one of claims 1 to 6, **characterised in that** the concentration of alkali metal or alkaline earth metal silicate in the solution is between 5 and 100 g/L.

8. The method according to any one of claims 1 to 7, **characterised in that** the rinsing step **C)** is carried out in a deionized water having a conductivity between 1 and 100 µS/cm.

9. A method for treating the surface of an aluminium or aluminium alloy part for use in the aeronautical sector, comprising at least the following steps:
i) subjecting said part to an anodization step, having possibly previously undergone a surface preparation step (degreasing, then pickling);
ii) treating the anodized part by a post-anodization sealing method according to any of claims 1 to 8; and
iii) applying one or more layers of paint.

10. A method for treating the surface of an aluminium or aluminium alloy part intended for use in the aeronautical sector, comprising at least the following steps:
i) subjecting said part to an anodization step, having possibly previously undergone a surface preparation step (degreasing, then pickling);
ii) treating the anodized part by a post-anodization sealing method according to any of claims 1 to 8; and optionally
iv) applying a HAO treatment on at least one portion of the functional areas of the part.

11. A use of a post-anodization sealing method according to any one of claims 1 to 8, in the surface treatment of aluminium or aluminium alloy parts intended for the aeronautical sector.

12. An aluminium or aluminium alloy part treated by a post-anodization sealing method according to any of claims 1 to 8, intended for the aeronautical sector.

13. The aluminium or aluminium alloy part according to claim 12, **characterised in that** it is surface treated by a surface treatment method according to claim 9 or 10.
